# EUROPEAN PATENT APPLICATION

(11) **EP 4 722 403 A1**
(43) Date of publication of application: **08.04.2026**
(21) Application number: 24819008.4
(22) Date of filing: 27.05.2024
(51) Int. Cl.: C22C 38/00, C21D 8/12, C21D 9/00, C21D 9/46, C22C 38/60, H01F 1/147

(54) **NON-ORIENTED MAGNETIC STEEL SHEET AND METHOD FOR MANUFACTURING SAME**

(30) Priority: 06.06.2023 JP 2023093004
(71) Applicant: JFE Steel Corporation, Tokyo, 100-0011 (JP)
(72) Inventor: MARUYAMA Shigehiro, Tokyo 100-0011 (JP); OKUBO Tomoyuki, Tokyo 100-0011 (JP); SAITO Hayato, Tokyo 100-0011 (JP); SUEHIRO Ryuichi, Tokyo 100-0011 (JP)
(74) Representative: Hoffmann Eitle
(86) International application number: PCT/JP2024/013541
(87) International publication number: WO 2024/252769

(57) **Abstract**

An object is to inexpensively provide an excellent non-oriented electrical steel sheet that exhibits high blanking properties and low iron loss. Specifically, provided is a non-oriented electrical steel sheet with a component composition including C, Si, Mn, P, S, Al, N, Pb, and Ca, in which the number density of Pb precipitates with a particle size of 10 to 100 nm is 100 particles/mm² or less, and the number density of Pb-Ca complex precipitates with a particle size of 0.5 to 5.0 µm is 0.1 particles/mm² to 1000 particles/mm². Also provided is a method for producing a non-oriented electrical steel sheet including a hot-rolling step, a hot-rolled sheet annealing step, a cold-rolling step, and a finishing annealing step, in which the hot-rolling step includes subjecting a steel slab to a two-stage heating step including first heating at 460°C to 540°C for 5 minutes or more, and second heating at 1060°C to 1140°C for 20 minutes or more, finish rolling is performed by setting the entry-side steel sheet temperature FET in the first pass to 940°C to 1100°C, and setting the rolling reduction in the first pass to 40% or greater, and the hot-rolled sheet annealing step is performed at an annealing temperature of 900°C to 1100°C.

## Description

### Technical Field

The present invention relates to a non-oriented electrical steel sheet that exhibits excellent blanking properties and magnetic properties, as well as a method for producing the same.

### Background Art

Non-oriented electrical steel sheets used for drive motors of electric vehicles or hybrid vehicles are required to have low iron loss to reduce energy loss. As a method for reducing iron loss, adding elements such as Si and Al has been proposed to be effective. However, this method has a problem in that it significantly degrades the blanking properties of an electrical steel sheet when it is formed into a motor core. Low blanking properties result in early wear of a blanking die.

To address this problem, various technologies have been proposed to enhance the blanking properties of steel sheets.

Patent Literature 1 discloses a method for producing a non-oriented electrical steel sheet involving controlling the mass ratio of Si and Al. Specifically, it is intended to provide a non-oriented electrical steel sheet having excellent magnetic properties as an iron core material of an electrical device, and also having excellent blanking properties to be easily formed into an iron core of an electrical device. The non-oriented electrical steel sheet, which is excellent in both magnetic and blanking properties, has steel components including, in mass%, C: 0.003% or less, Si: 1.0% to 3.0%, Al: 0.1% to 3.0%, and Mn: 0.1% to 1.0%, with the balance being Fe and unavoidable impurity elements, in which the contents of Al and Si satisfy the relationship of 0.2 ≤ Al/(Si+Al) ≤ 0.6, the yield ratio represented by (yield strength / tensile strength) is 0.6 or greater, and the Vickers hardness is 200 or less.

Patent Literature 2 discloses a method involving adding Cr to the component composition. Specifically, the method aims to provide an electrical steel sheet having low iron loss after finishing annealing and also having excellent blanking properties. The electrical steel sheet has excellent blanking properties that contains, in mass%, C: 0.005% or less, P: 0.05% or less, Si: 1 to 3.5%, Mn: 0.05 to 1.5%, Al: 0.1 to 3%, S: 0.02% or less, N: 0.005% or less, and Cr: 0.2 to 3%, with the balance being substantially Fe, in which the Vickers hardness of the steel sheet surface is 190 or less, and the number density of oxide-based inclusions with a diameter of 1 µm or greater in a cross-section of the steel sheet is 30 particles/mm² or less.

### Citation List

### Patent Literature

Patent Literature 1: JP-2015-214758A
Patent Literature 2: JP-2003-27195A

### Summary of Invention

### Technical Problem

However, the conventional technologies disclosed in the foregoing patent literatures have the following problems.

The technology described in Patent Literature 1 requires the addition of at least 2.29% Al, as seen in Examples, which poses a problem for the manufacturability of steel sheets.

In addition, the technology described in Patent Literature 2 involves the addition of expensive Cr, which increases production costs.

The present invention has been made in view of the foregoing problems of the conventional technologies, and it is an object of the present invention to provide an excellent non-oriented electrical steel sheet that achieves both high blanking properties and low iron loss.

### Solution to Problem

The non-oriented electrical steel sheet according to the present invention that advantageously solves the foregoing problems has the following features.
[1] A non-oriented electrical steel sheet including a component composition including, in mass %, C: 0.005% or less, Si: 2.5% to 5.0%, Mn: 0.1% to 3.0%, P: 0.100% or less, S: 0.005% or less, Al: 2.0% or less, N: 0.005% or less, Pb: 0.00010% to 0.00200%, and Ca: 0.0010% to 0.020%, and further optionally including at least one of Groups A to E of components below:
   - Group A: one or more elements selected from the group consisting of Mo: 0.001 to 0.050%, Zn: 0.001 to 0.010%, Ti: 0.001 to 0.010%, Sn: 0.001 to 0.200%, and Sb: 0.001 to 0.200%;
   - Group B: one or more elements selected from the group consisting of As: 0.020% or less, Nb: 0.005% or less, W: 0.050% or less, V: 0.050% or less, Ta: 0.0020% or less, and Cu: 0.01 to 1.0%;
   - Group C: one or more elements selected from the group consisting of Ni: 0.01 to 1.0% and B: 0.0020% or less;
   - Group D: one or more elements selected from the group consisting of Cr: 0.01 to 3.0%, Mg: 0.0001 to 0.005%, and REM: 0.001 to 0.05%; and
   - Group E: one or more elements selected from the group consisting of Co: 0.10% or less, Ge: 0.030% or less, and Ga: 0.030% or less,

   with a balance being Fe and unavoidable impurities,
   in which a number density of Pb precipitates with a particle size of 10 to 100 nm is 100 particles/mm² or less, and a number density of Pb-Ca complex precipitates with a particle size of 0.5 to 5.0 µm is 0.1 particles/mm² to 1000 particles/mm².

The method for producing a non-oriented electrical steel sheet according to the present invention that advantageously solves the foregoing problems has the following features.

[2] A method for producing a non-oriented electrical steel sheet, including:
a hot-rolling step of heating a steel slab with a component composition including, in mass %, C: 0.005% or less, Si: 2.5% to 5.0%, Mn: 0.1% to 3.0%, P: 0.100% or less, S: 0.005% or less, Al: 2.0% or less, N: 0.005% or less, Pb: 0.00010% to 0.00200%, and Ca: 0.0010% to 0.020%, and further optionally including at least one of Groups A to E of components below:
   - Group A: one or more elements selected from the group consisting of Mo: 0.001 to 0.050%, Zn: 0.001 to 0.010%, Ti: 0.001 to 0.010%, Sn: 0.001 to 0.200%, and Sb: 0.001 to 0.200%,
   - Group B: one or more elements selected from the group consisting of As: 0.020% or less, Nb: 0.005% or less, W: 0.050% or less, V: 0.050% or less, Ta: 0.0020% or less, and Cu: 0.01 to 1.0%,
   - Group C: one or more elements selected from the group consisting of Ni: 0.01 to 1.0% and B: 0.0020% or less,
   - Group D: one or more elements selected from the group consisting of Cr: 0.01 to 3.0%, Mg: 0.0001 to 0.005%, and REM: 0.001 to 0.05%, and
   - Group E: one or more elements selected from the group consisting of Co: 0.10% or less, Ge: 0.030% or less, and Ga: 0.030% or less,
with a balance being Fe and unavoidable impurities, followed by hot-rolling the steel slab to form a hot-rolled steel sheet;
a hot-rolled sheet annealing step of annealing the hot-rolled steel sheet to form a hot-rolled annealed sheet;
a cold-rolling step of subjecting the hot-rolled annealed sheet to single cold rolling or cold rolling two or more times with intermediate annealing interposed between each rolling, to form a cold-rolled steel sheet; and
a finishing annealing step of subjecting the cold-rolled steel sheet to finishing annealing,
characterized in that,
in the hot-rolling step, the steel slab heating includes a two-stage heating process of a first heating at a temperature of 460°C to 540°C for 5 minutes or more and a second heating at a temperature of 1060°C to 1140°C for 20 minutes or more, and finish rolling is performed such that, in a first pass, an entry-side steel sheet temperature is between 940°C and 1100°C and a rolling reduction is 40% or greater, and
the hot-rolled sheet annealing step is performed at an annealing temperature of 900°C to 1100°C.

[3] The method for producing a non-oriented electrical steel sheet according to [2] above, in which the steel slab is a thin slab formed by continuous casting to have a thickness of 70 mm to 200 mm.

### Advantageous Effects of Invention

According to the present invention, it is possible to produce an excellent non-oriented electrical steel sheet that achieves both low iron loss and high blanking properties even with the use of steel having a high Si content.

### Brief Description of Drawings

[Fig. 1] is a graph illustrating the relationship between the Pb content in a steel sheet and the burr height of a blanking specimen.
[Fig. 2] is a graph illustrating the relationship between the Pb content and the number density of Pb precipitates with a particle size of 10 to 100 nm in a steel sheet.
[Fig. 3] is a graph illustrating the influence of the presence or absence of the addition of Pb that withstands the relationship between the Ca content in a steel sheet and the iron loss W_{10/400}.
[Fig. 4] is a graph illustrating the relationship between the Ca content and the number density of Pb-Ca complex precipitates with a particle size of 0.5 to 5.0 µm in a steel sheet.

### Description of Embodiments

The inventors studied various steel components and consequently discovered that adding Pb can improve the blanking properties of a non-oriented electrical steel sheet. As a result of conducting concentrated studies focusing on a combination of iron loss reduction through high alloying and an improvement in blanking properties by adding Pb, the inventors found that adding Ca is effective in controlling Pb precipitates, thereby achieving both low iron loss and high blanking properties, and thus developed the present invention.

First, experiments conducted to develop the present invention will be described.

### <Experiment 1>

To develop a non-oriented electrical steel sheet having excellent blanking properties, the inventors have focused on the effects of adding Pb and measured blanking properties and iron loss to reveal the influence of Pb on the workability and the magnetic properties of the steel sheet. Specifically, steel slabs, each having a basic steel composition including, in mass%, C: 0.002%, Si: 3.4%, Mn: 0.3%, P: 0.01%, S: 0.002%, N: 0.002%, Al: 1.2%, and the balance being Fe and unavoidable impurities, and also containing Pb in a range of 0 to 0.005%, were used as test materials. Each test material was heated at 1100°C for 20 minutes and was then hot-rolled to form a hot-rolled steel sheet with a thickness of 2.0 mm.

Note that the entry-side temperature and rolling reduction of the steel sheet during the first pass of the hot rolling were set to 1050°C and 50%, respectively, while the exit-side temperature in the final pass was set to 950°C. The hot-rolled sheet was then subjected to hot-rolled sheet annealing at 980°C for 30 seconds and cold rolling to form a cold-rolled steel sheet with a thickness of 0.25 mm, followed by finishing annealing at 960°C for 10 seconds in a dry atmosphere of H₂:N₂=25:75 (vol% ratio).

An Epstein test sample having a width of 30 mm × a length of 280 mm was cut out from the rolling direction and the width direction of the thus obtained steel sheet to measure the iron loss W_{10/400} using an Epstein testing machine. The blanking properties were evaluated based on the burr height on an edge face of a 17 mm × 17 mm square test specimen, formed by blanking the steel sheet 2×10⁵ times using an SKD11 die.

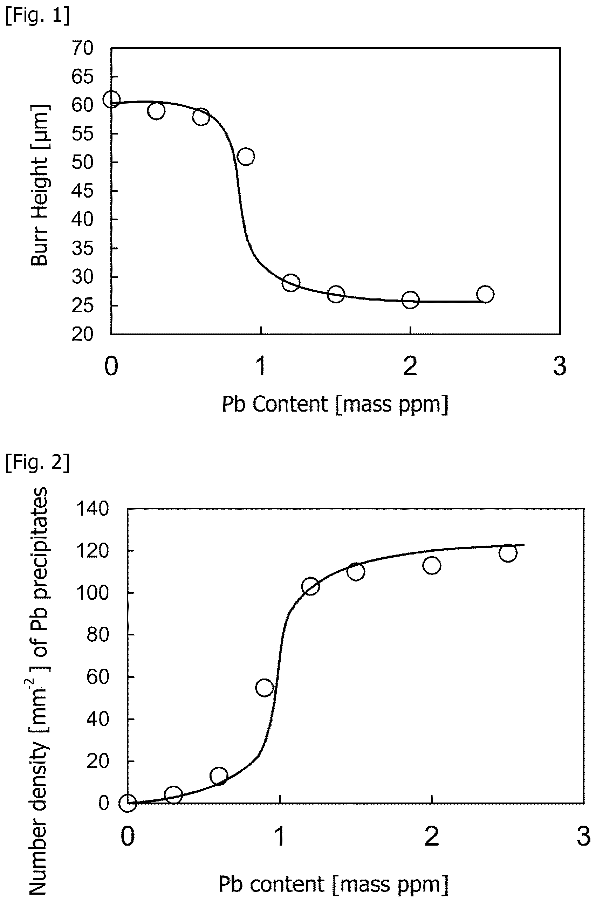

Fig. 1 shows the relationship between the Pb content in a steel sheet and the burr height. As demonstrated in Fig. 1, adding Pb decreased the burr height, that is, improved blanking properties.

Meanwhile, iron loss significantly increased with the addition of Pb into the steel. Further, the average crystal grain size of the steel sheet, which was observed with an optical microscope, was found to decrease with the addition of Pb.

To examine the cause of the finer grain size of the microstructure, precipitates in the steel sheet were observed by a thin film method using a transmission electron microscope (TEM). As a result, a large number of Pb precipitates with a particle size of 10 to 100 nm were identified in the steel sheet to which Pb had been added. Thus, the number of such fine Pb precipitates that hinder the grain growth and thus adversely affect the iron loss properties was specified.

Fig. 2 shows the relationship between the Pb content and the number density of Pb precipitates with a particle size of 10 to 100 nm. As can be seen from Fig. 2, the number density of Pb precipitates increased with the addition of Pb.

Accordingly, it is considered that iron loss increased due to the increase in hysteresis loss, which was caused by a decrease in the grain growth property as the number of Pb precipitates increased.

### <Experiment 2>

The influence of the addition of Ca on the iron loss of a non-oriented electrical steel sheet containing Pb was examined. Specifically, steel slabs having a basic steel composition including, in mass%, C: 0.002%, Si: 3.4%, Mn: 0.3%, P: 0.01%, S: 0.002%, N: 0.002%, Al: 1.2%, and Pb: 0.0010%, with the balance being Fe and unavoidable impurities, and containing Ca in a range of 0 to 0.05% were used as test materials. Each test material was subjected to processes including hot rolling to finishing annealing, as in Experiment 1. Then, an Epstein test sample having a width of 30 mm × a length of 280 mm was cut out from the thus obtained steel sheet in the rolling direction and in the width direction. Then, the iron loss W_{10/400} was measured with an Epstein testing machine.

Measurement of the iron loss W_{10/400} of the obtained steel sheet revealed that varying the Ca content did not suppress the increase in iron loss due to Pb. However, when precipitates were observed by a thin film method using a transmission electron microscope (TEM), Pb-Ca complex precipitates with a particle size of 0.5 to 5.0 µm were observed.

Note that, in the present invention, the term ' Pb-Ca complex precipitates' refers to precipitates containing 10% or more Pb and 20% or more Ca, based on the proportion of the number of atoms obtained through EDS (Energy dispersive X-ray spectrometry).

Then, the inventors examined the control of the Pb-Ca complex precipitates and the suppression of an increase in iron loss due to Pb.

### <Experiment 3>

The influence of the reheating conditions of a slab before performing hot rolling on the iron loss and blanking properties of a non-oriented electrical steel sheet containing Pb and Ca was examined. Specifically, steel slabs having a basic steel composition including, in mass%, C: 0.002%, Si: 3.4%, Mn: 0.3%, P: 0.01%, S: 0.002%, N: 0.002%, Al: 1.2%, and Pb: 0.0010%, with the balance being Fe and unavoidable impurities, and Ca added in the range of 0 to 0.05%, were used as test materials. As a comparative material, a steel slab that did not contain Pb was also prepared.

Each test material was subjected to two-stage heating, including first heating at 500°C for 5 minutes and second heating at 1100°C for 20 minutes, and then hot-rolled to form a hot-rolled sheet with a thickness of 2.0 mm. Note that the entry-side temperature and rolling reduction of the steel sheet during the first pass of the hot rolling were set to 1050°C and 50%, respectively, and the exit-side temperature in the final pass was set to 950°C. The hot-rolled sheet was then subjected to hot-rolled sheet annealing at 980°C for 30 seconds, and cold-rolling to form a cold-rolled sheet with a thickness of 0.25 mm, followed by finishing annealing at 960°C for 10 seconds in a dry atmosphere of H₂:N₂=25:75 (vol% ratio).

An Epstein test sample having a width of 30 mm × a length of 280 mm was cut out from the thus obtained steel sheet in the rolling direction and in the width direction to measure the iron loss W_{10/400} using an Epstein testing machine. The blanking properties were evaluated based on the burr height on an edge face of a 17 mm × 17 mm square test specimen, formed by blanking the steel sheet 2×10⁵ times using an SKD11 die.

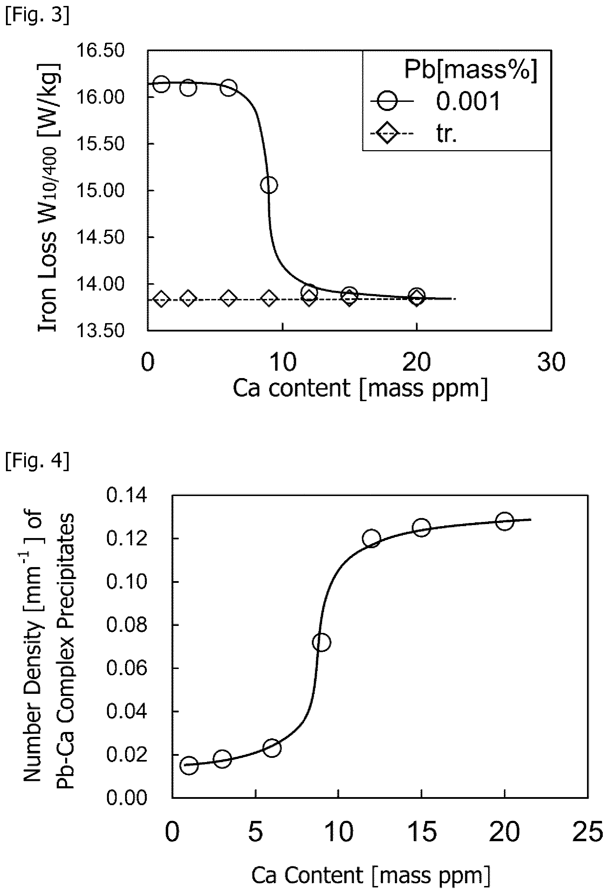

Fig. 3 shows the relationship between the Ca content and iron loss W_{10/400} of steel sheets with and without Pb added. As can be seen in Fig. 3, iron loss decreases when Ca is added into the steel sheet that contains Pb. Through comparison with the steel sheet that does not contain Pb, it is believed that the addition of Ca suppressed the Pb-induced increase in iron loss.

As a result of an observation by a thin film method using a transmission electron microscope (TEM), Pb-Ca complex precipitates with a particle size of 0.5 to 5.0 µm were observed. The number of the Pb-Ca complex precipitates was identified. Fig. 4 shows the relationship between the number density of Pb-Ca complex precipitates and the Ca content. As can be seen in Fig. 4, the number density of Pb-Ca complex precipitates increased with an increase in the Ca content resulting from the addition of Ca, and the number of Pb precipitates, which contribute to the formation of finer microstructures, decreased accordingly.

The addition of Ca hardly changed the burr height.

These results show that a non-oriented electrical steel sheet with reduced iron loss and excellent blanking properties can be produced by performing two-stage heating on a slab having a component composition including Pb and added Ca.

Hereinafter, a non-oriented electrical steel sheet according to the present embodiment will be described.

### <Component composition of non-oriented electrical steel sheet>

The non-oriented electrical steel sheet contains chemical components including, in mass%, C: 0.005% or less, Si: 2.5% to 5.0%, Mn: 0.1% to 3.0%, P: 0.100% or less, S: 0.005% or less, Al: 2.0% or less, N: 0.005% or less, Pb: 0.00010% to 0.00200%, and Ca: 0.0010% to 0.020%. Each component will be described hereinafter. In the following description, "%" representing the content of each component means "mass%" unless otherwise stated.

### C: 0.005% or less

C is a detrimental element that forms carbide by causing magnetic aging in a product sheet to increase iron loss. The C content should be 0.005% or less to suppress magnetic aging. Although the lower limit of the C content is not specified, it is preferably about 0.0001%, from the perspective of suppressing the decarburization costs.

### Si: 2.5% to 5.0%

Si has the effect of increasing the electric resistance of a steel sheet and thus mitigating iron loss. To sufficiently reduce iron loss, Si needs to be added in an amount of 2.5% or greater. Therefore, the Si content should be 2.5% or greater. Meanwhile, if the Si content exceeds 5.0%, rolling becomes difficult, degrading the blanking properties. Therefore, the Si content should be 5.0% or less. From the perspective of manufacturability, it is preferable that the Si content is 4.0% or less.

### Mn: 0.1% to 3.0%

Mn has the effect of increasing the electric resistance of the steel sheet, and thus reducing iron loss, similar to Si and Al. Therefore, the Mn content should be 0.1% or greater. Meanwhile, if the Mn content exceeds 3.0%, Mn carbide precipitates, which increase iron loss. Therefore, the Mn content is set to 3.0% or less. Preferably, the Mn content is set in the range of 0.2% to 1.0%.

### P: 0.100% or less

P has the effect of increasing the strength of steel and thus can be used to adjust the strength. Meanwhile, if the P content exceeds 0.100%, steel becomes brittle, thereby mitigating manufacturability. Therefore, the P content should be 0.100% or less. Note that the lower limit of the P content is not specified, but is preferably set to about 0.001mass%, from the perspective of suppressing the dephosphorization cost.

### S: 0.005% or less

S is a detrimental element that forms fine sulfide, thereby hindering the grain growth and increasing iron loss. Therefore, the S content should be minimized as much as possible. In particular, if the S content exceeds 0.005%, the adverse effect becomes significant. Therefore, the S content should be 0.005% or less. Preferably, the S content should be 0.003% or less.

### Al: 2.0% or less

Similar to Si, Al has the effect of increasing the electric resistance of a steel sheet while reducing iron loss. However, if the Al content exceeds 2.0%, rolling becomes difficult and blanking properties are further reduced. Therefore, the Al content should be 2.0% or less.

However, if the Al content is in the range of greater than or equal to 0.01% but less than 0.1%, fine AlN precipitates, increasing iron loss. Consequently, the Al content is preferably set in the range of 0.1% to 2.0%.

### N: 0.005% or less

N is a detrimental element that forms fine nitride, thereby hindering the grain growth and increasing iron loss. Therefore, the N content should be minimized as much as possible. In particular, if the N content exceeds 0.005%, the foregoing adverse effect becomes significant. Therefore, the N content is set to 0.005% or less. Preferably, the N content is set to 0.003% or less.

### Pb: 0.00010% to 0.00200%

Since the addition of Pb can improve blanking properties, the Pb content should be 0.00010% or greater. However, if the Pb content exceeds 0.00200%, Pb forms a large number of fine precipitates by itself, which hinders the grain growth and increases iron loss. Thus, the Pb content is set to 0.00010% to 0.00200%.

### Ca: 0.0010% to 0.020%

Ca reacts with S to form CaS as coarse precipitates, which suppresses the precipitation of fine sulfide, such as MnS, reducing iron loss. In addition, CaS and CaO undergo complex precipitation with Pb, and have the effect of suppressing the precipitation of fine Pb precipitates. Accordingly, the Ca content should be 0.0010% or greater. However, if the Ca content exceeds 0.020%, the CaS and CaO contents increase, hindering the grain growth and increasing iron loss. Consequently, the Ca content should be 0.020% or less.

The non-oriented electrical steel sheet according to the embodiment has the foregoing basic component composition and may further optionally contain at least one of Groups A to E of the components described below:
Group A: one or more elements selected from the group consisting of Mo: 0.001 to 0.050%, Zn: 0.001 to 0.010%, Ti: 0.001 to 0.010%, Sn: 0.001 to 0.200%, and Sb: 0.001 to 0.200%
Group B: one or more elements selected from the group consisting of As: 0.020% or less, Nb: 0.005% or less, W: 0.050% or less, V: 0.050% or less, Ta: 0.0020% or less, and Cu: 0.01 to 1.0%
Group C: one or more elements selected from the group consisting of Ni: 0.01 to 1.0% and B: 0.0020% or less
Group D: one or more elements selected from the group consisting of Cr: 0.01 to 3.0%, Mg: 0.0001 to 0.005%, and REM: 0.001 to 0.05%
Group E: one or more elements selected from the group consisting of Co: 0.10% or less, Ge: 0.030% or less, and Ga: 0.030% or less

### Mo: 0.001 to 0.050%

Mo reacts with C to form carbide at the grain boundaries, increasing the strength. Thus, the Mo content should be 0.001% or greater. However, if the Mo content exceeds 0.050%, iron loss tends to increase. Consequently, the Mo content should be 0.050% or less.

### Zn: 0.001 to 0.010%

Zn reacts with S to form coarse sulfide, and has the effect of suppressing the precipitation of fine sulfide, such as MnS, and thus reducing iron loss. Therefore, the Zn content should be 0.001% or greater. Meanwhile, if the Zn content exceeds 0.010%, the content of the sulfide increases, hindering the grain growth and increasing iron loss. Consequently, the Zn content should be 0.010% or less.

### Ti: 0.001 to 0.010%

Similar to Mo, Ti reacts with C to form carbide, thereby suppressing grain growth and increasing toughness. Therefore, the Ti content should be 0.001% or greater. However, when the Ti content exceeds 0.010%, iron loss tends to increase. Therefore, the Ti content should be 0.010% or less.

### Sn: 0.001 to 0.200%

Similar to P, the addition of Sn significantly improves the texture, increasing the magnetic flux density and also reducing iron loss. Therefore, the Sn content should be 0.001% or greater. However, if the Sn content exceeds 0.200%, these effects saturate, resulting in lower manufacturability. Therefore, the Sn content should be 0.200% or less.

### Sb: 0.001 to 0.200%

Similar to P and Sn, the addition of Sb significantly improves the texture, increasing the magnetic flux density and also reducing iron loss. Therefore, the Sb content should be 0.001% or greater. However, if the Sb content exceeds 0.200%, these effects saturate, resulting in lower manufacturability. Therefore, the Sb content should be 0.200% or less.

### As: 0.020% or less

As has the effect of reducing the crystal grain size and thus increasing the strength. Meanwhile, if the As content exceeds 0.020%, fractures may occur during cold rolling. Therefore, the As content should be 0.020% or less.

### Nb: 0.005% or less

Nb has the effect of refining the crystal grain size and increasing the strength. Meanwhile, if the Nb content exceeds 0.005%, fine precipitates are formed, increasing iron loss. Therefore, the Nb content should be 0.005% or less.

### W: 0.050% or less

W has the effect of refining the crystal grain size and increasing the strength. Meanwhile, if the W content exceeds 0.050%, fine precipitates are formed, increasing iron loss. Therefore, the W content is set to 0.050% or less.

### V: 0.050% or less

V has the effect of refining the crystal grain size and increasing the strength. Meanwhile, if the V content exceeds 0.050%, fine precipitates are formed, increasing iron loss. Therefore, the V content should be 0.050% or less.

### Ta: 0.0020% or less

Ta has the effect of refining the crystal grain size and increasing the strength. Meanwhile, if the Ta content exceeds 0.0020%, fine precipitates are formed, increasing iron loss. Therefore, the Ta content should be 0.0020% or less.

### Cu: 0.01 to 1.0%

Cu has the effect of increasing the strength of a steel sheet by applying aging treatment. Therefore, the Cu content should be 0.01% or greater. Meanwhile, if the Cu content exceeds 1.0%, precipitates are formed, increasing iron loss. Thus, the Cu content should be 0.01 to 1.0%.

### Ni: 0.01 to 1.0%

Ni has the effect of improving the toughness of a steel sheet and increasing productivity. Therefore, the Ni content should be 0.01% or greater. Meanwhile, if the Ni content exceeds 1.0%, this effect saturates, increasing costs. Therefore, the Ni content should be 0.01 to 1.0%.

### B: 0.0020% or less

B has the effect of improving the toughness of a steel sheet and increasing productivity. Meanwhile, if the B content exceeds 0.0020%, iron loss increases. Therefore, the B content should be 0.0020% or less.

### Cr: 0.01 to 3.0%

Cr increases the electric resistance of a steel sheet and thus reduces iron loss. Therefore, the Cr content should be 0.01% or greater. Meanwhile, if the Cr content exceeds 3.0%, the magnetic flux density is reduced. Therefore, the Cr content should be 3.0% or less.

### Mg: 0.0001 to 0.005%

Mg forms coarse sulfide particles with S in steel and thus reduces iron loss. Accordingly, the Mg content should be 0.0001% or greater. Meanwhile, if the Mg content exceeds 0.005%, iron loss increases. Therefore, the Mg content should be 0.0001% to 0.005%.

### REM: 0.001 to 0.05%

REM coarsens sulfide in steel and reduces iron loss. Therefore, the REM content should be 0.001% or greater. Meanwhile, if the REM content exceeds 0.05%, iron loss increases contrarily. Consequently, the REM content should be 0.001 to 0.05%.

### Co: 0.10% or less

Co improves the texture of a steel sheet and increases the magnetic flux density. Meanwhile, if the Co content exceeds 0.10%, this effect saturates, resulting in a cost increase. Therefore, the Co content should be 0.10% or less.

### Ge: 0.030% or less

Ge has the effect of improving the texture of a steel sheet and increasing the magnetic flux density. However, if the Ge content exceeds 0.030%, this effect saturates, resulting in cost increase. Therefore, the Ge content should be 0.030% or less.

### Ga: 0.030% or less

Ga improves the texture of a steel sheet and increases the magnetic flux density. Meanwhile, if the Ga content exceeds 0.030%, this effect saturates, resulting in a cost increase. Therefore, the Ga content should be 0.030% or less.

The non-oriented electrical steel sheet according to the present embodiment has a chemical composition including the foregoing elements, with the balance being Fe and unavoidable impurities.

### <Morphology of precipitates>

Next, precipitates in the non-oriented electrical steel sheet will be described.

The number density of Pb precipitates with a particle size of 10 to 100 nm, which greatly influence the pinning of the grain boundaries, is controlled to be in the range of 100 particles/mm² or less. In addition, to control the number of Pb precipitates, the number density of Pb-Ca complex precipitates with a particle size of 0.5 to 5.0 µm is controlled to be in the range of 0.1 particles/mm² to 1000 particles/mm².

Herein, the particle size of each precipitate is evaluated based on the circle-equivalent diameter calculated from a projected area measured using a microscope.

### <Microstructure of non-oriented electrical steel sheet>

Next, the metallographic structure of the non-oriented electrical steel sheet will be described.

It is preferable to set the average crystal grain size of the steel sheet to 60 µm to 300 µm, by controlling the number densities of Pb precipitates and Pb-Ca complex precipitates, as described above. If the average crystal grain size of the steel sheet is less than 60 µm, iron loss increases. Conversely, if the microstructure of the steel sheet is too coarse, that is, if the average crystal grain size exceeds 300 µm, toughness deteriorates, making fractures more likely to occur during processing.

### <Method for producing non-oriented electrical steel sheet>

Next, a method for producing the non-oriented electrical steel sheet according to the present embodiment will be described.

The non-oriented electrical steel sheet is produced by performing a process, which includes a hot-rolling step, a hot-rolled sheet annealing step, a cold-rolling step, and a finishing annealing step, on a steel slab with a component composition adjusted as described above.

### Slab

A slab can be produced by forming steel with a component composition that matches that of the present invention through a conventional refining process including a converter and a vacuum degassing process and then subjecting the steel to a conventional continuous casting process, ingot-making blooming process, or the like. From the perspective of reducing environmental burdens (reducing CO₂ emissions), it is preferable to use an electric furnace process that uses scrap as steel raw material (iron source) rather than blast furnace pig iron. When the slab is produced by melting scrap in an electric furnace, there is an advantage that the Pb content increases due to Pb contained in the scrap. This reduces the cost of adding Pb. The scrap also contains elements such as Mo, Ti, and Zn that can be optionally added in the present invention. This improves the properties of the steel sheet while reducing environmental burdens.

### Hot rolling step

Prior to hot rolling, the slab is subjected to reheating by means of at least two heating apparatuses arranged in series, each having a different output level, so as to perform two-stage heating including a first heating and a second heating.

The first heating is designed to melt Pb, which exists alone, to increase the fluidity of Pb, and thus facilitate the complex precipitation of Pb with Ca.
Specifically, the heating temperature is set to between 460°C and 540°C, and the heating time is set to 5 minutes or more. If the slab heating temperature is lower than 460°C, it is impossible to melt Pb, making it difficult to cause the complex precipitation of Ca and Pb. Meanwhile, if the heating temperature for the slab exceeds 540°C, Pb will preferentially exist alone rather than undergoing complex precipitation with Ca, making it difficult to obtain Pb-Ca complex precipitates. The upper limit of the heating time is not specified, but preferably about 10 minutes, from the perspective of reducing the operating cost.

The second heating is designed to increase the temperature of the slab and thus facilitate rolling. Specifically, the heating temperature should be between 1060°C and 1140°C, and the heating time is set to 20 minutes or more. If the slab heating temperature exceeds 1140°C, precipitates such as AlN and MnS dissolve as solid solution in the steel and precipitate again in a subsequent step, which will hinder the grain growth, resulting in increased iron loss. Meanwhile, if the slab heating temperature is lower than 1060°C, the hot rolling load increases, failing to ensure the entry-side temperature of the finishing rolling (hereinafter, the entry-side temperature of rolling shall also be referred to as "FET"). Although the upper limit of the heating time is not specified, it is preferably set to about 30 minutes from the perspective of reducing operating costs.

The hot rolling includes rough rolling, where the slab is formed into a sheet bar with a predetermined thickness using a plurality of single-stand rolling mills, and finishing rolling following the rough rolling, where rolling is continuously performed with a finishing rolling mill including a plurality of stands to obtain a target thickness. The rough rolling may be performed by a conventional method.

The finishing rolling following the rough rolling is performed by setting the steel sheet temperature on the entry side in the first pass, that is, the entry-side temperature FET (°C) of the finishing rolling to 940°C or greater to promote the recrystallization and the grain growth. Meanwhile, if the temperature exceeds 1100°C, some of the precipitates containing MnS and Pb melt and precipitate again in a subsequent step, resulting in increasing iron loss. Therefore, the temperature should be 1100°C or lower. Further, to detoxify precipitates such as MnS and AIN, which hinder the grain growth and increase iron loss, the rolling reduction in the first pass should be 40% or greater. Although the upper limit of the rolling reduction is not specified, it is preferably set in the range of 40 to 50% to ensure manufacturability.

The exit-side temperature in the final pass of the finishing rolling of hot rolling should be 930°C or higher, from the perspective of promoting the recrystallization and grain growth of a hot-rolled steel sheet and thus improving the magnetic properties.

It is preferable to hot roll a thin slab with a thickness of 70 to 200 mm using a thin-slab caster formed by integrating a continuous casting machine with a rolling facility. This is because, as the slab is not cooled to the room temperature, Pb can form complex precipitates with Ca before precipitating alone.

### Hot-rolled sheet annealing step

The hot-rolled steel sheet is subjected to hot-rolled sheet annealing involving holding the steel sheet at a predetermined temperature for 1 second or more. The temperature for the hot-rolled sheet annealing should be 900°C or higher to recrystallize the microstructure of the hot-rolled sheet and thus obtain excellent magnetic properties. Meanwhile, if the temperature of the hot-rolled sheet annealing exceeds 1100°C, some of precipitates containing MnS and Pb melt and precipitate again in a subsequent step, resulting in increased iron loss. Therefore, the temperature of the hot-rolled sheet annealing should be 1100°C or less. After the hot-rolled sheet annealing, pickling, cold rolling, and finishing annealing may be performed by conventional processes.

### Cold-rolling step

Cold rolling is a step of cold rolling the hot-rolled annealed sheet that undergoes pickling to the thickness of the product sheet (final thickness). Cold rolling is not limited to a particular process as long as the final thickness is achieved. However, if the rolling reduction in the cold rolling is too low, the strength of the steel sheet after the finishing annealing may become significantly reduced. Therefore, the rolling reduction in the cold rolling should be 50% or greater, and preferably 70% or greater. Further, the cold rolling is not limited to one cold-rolling step, and two or more cold-rolling steps may be performed with intermediate annealing interposed therebetween as appropriate. The intermediate annealing may be performed under conventional conditions and is not limited to specific ones.

### Finishing annealing step

Finishing annealing of a cold-rolled sheet is the annealing process applied to a cold-rolled sheet that has been cold-rolled to the final thickness to impart the desired magnetic and mechanical properties. In order to induce recrystallization and sufficiently eliminate strain generated during cold rolling, thereby obtaining superior magnetic properties, the finishing annealing temperature of the cold-rolled sheet is preferably set at 850°C or higher. Further, to obtain excellent magnetic properties, the finishing annealing temperature of the cold-rolled sheet should preferably be 880°C or higher. Meanwhile, if the temperature of the finishing annealing of the cold-rolled sheet is too high, the recrystallized microstructure will become too coarse, which degrades the magnetic properties. Therefore, the temperature of the finishing annealing of the cold-rolled sheet should be set to 1050°C or less. Preferably, the temperature of the finishing annealing of the cold-rolled sheet should be 1030°C or less.

### Examples

The embodiment of the present invention will be described in further detail with reference to Examples. Note that the present invention is not limited to the production conditions or the product performance described in the following Examples. The desired performance can be achieved as long as the embodiment is within the scope of the present invention.

Steels Nos. 1 to 104 having the compositions of components shown in Tables 1-1 to 1-4 were formed through a refining process including converter-vacuum degassing processes and were each cast into a slab through a continuous casting process. Then, the slab was subjected to two-stage heating, including first heating at 500°C for 5 minutes and second heating at 1100°C for 20 minutes, and was then hot-rolled to form a hot-rolled steel sheet with a thickness of 2.0 mm. Note that the entry-side temperature and rolling reduction of the steel sheet in the first pass of the hot rolling were set to 1050°C and 50%, respectively, and the exit-side temperature in the final pass was set to 950°C.

Next, hot-rolled sheet annealing was performed at 980°C for 30 seconds.

The steel sheet was then cold-rolled to form a cold-rolled steel sheet with a thickness of 0.25 mm, followed by finishing annealing at 960°C for 10 seconds in a dry atmosphere of H₂:N₂=25:75 (vol% ratio).

An Epstein test sample having a width of 30 mm × a length of 280 mm was cut out from the thus-obtained steel sheet in the rolling direction and in the width direction. Then, an Epstein test in accordance with JIS C 2550-3 (2019) was performed to measure the iron loss W_{10/400}. An Epstein test sample with a thickness of 0.25 mm is determined to be excellent if it has an iron loss W_{10/400} of 14 W/kg or less.

In addition, a 17 mm × 17 mm square specimen was cut out from the steel sheet, and the burr height on an edge face of the specimen was measured after 2×10⁵ time blanking using an SKD11 die. If the height of the burr is 30 µm or less, the specimen is determined to have excellent blanking properties.

Furthermore, the number densities of Pb precipitates and Pb-Ca complex precipitates in the finishing-annealed sheet were measured by a thin film method using a TEM. Regarding each of the crystal grain size and the particle size of each precipitate, a circle-equivalent diameter was calculated from a projected area measured with a microscope. Tables 2-1 to 2-4 illustrate the measurement results.

Tables 2-1 to 2-4 demonstrate that controlling the component composition of a steel material within the scope of the present invention results in a non-oriented electrical steel sheet excellent in both iron loss properties and blanking properties.

Steel containing, in mass%, C: 0.0025%, Si: 2.85%, Mn: 0.30%, P: 0.006%, S: 0.0018%, N: 0.0025%, Al: 1.20%, Pb: 0.0006%, and Ca: 0.04% was formed through a refining process in converter-vacuum degassing to form a slab by continuous casting. The slab was then subjected to reheating, hot rolling, and hot-rolled sheet annealing under the conditions shown in Table 3.

Then, the obtained sheet was cold-rolled to form a cold-rolled steel sheet with a thickness of 0.25 mm, followed by finishing annealing at 960°C for 10 seconds in a dry atmosphere of H₂:N₂=25:75 (vol% ratio).

An Epstein test sample having a width of 30 mm × a length of 280 mm was cut out from the thus-obtained steel sheet in the rolling direction and in the width direction. Then, an Epstein test in accordance with JIS C 2550-3 (2019) was performed to measure the iron loss W_{10/400}. An Epstein test sample with a thickness of 0.25 mm is determined to be excellent if it has an iron loss W_{10/400} of 14 W/kg or less.

In addition, a 17 mm × 17 mm square specimen was cut out from the obtained steel sheet, and the burr height on an edge face of each specimen was measured after 2×10⁵ time blanking using an SKD11 die. If the burr height is 30 µm or less, the specimen is determined to have excellent blanking properties.

Further, the number densities of Pb precipitates and Pb-Ca complex precipitates in the finishing-annealed sheet were measured by a thin film method using a TEM. Regarding each of the crystal grain size and the particle size of each precipitate, a circle-equivalent diameter was calculated from a projected area measured with a microscope. Table 4 shows the measurement results.

Table 4 demonstrates that by controlling the production conditions for a steel sheet within the scope of the present invention, a non-oriented electrical steel sheet exhibits excellent iron loss and blanking properties.

**[Table 1-1]**

| mass% | | | | | | | | | |
|---|---|---|---|---|---|---|---|---|---|
| Condition No. | C | Si | Mn | P | S | N | Al | Pb | Ca |
| 1 | 0.0029 | 2.85 | 0.29 | 0.007 | 0.0020 | 0.0028 | 1.22 | - | - |
| 2 | 0.0025 | 2.80 | 0.29 | 0.006 | 0.0022 | 0.0030 | 1.16 | - | 0.0005 |
| 3 | 0.0027 | 2.89 | 0.30 | 0.009 | 0.0030 | 0.0027 | 1.25 | - | 0.0007 |
| 4 | 0.0025 | 2.88 | 0.30 | 0.010 | 0.0029 | 0.0020 | 1.21 | - | 0.0015 |
| 5 | 0.0013 | 2.84 | 0.29 | 0.005 | 0.0015 | 0.0017 | 1.18 | - | 0.0130 |
| 6 | 0.0038 | 2.82 | 0.29 | 0.010 | 0.0026 | 0.0024 | 1.18 | - | 0.0495 |
| 7 | 0.0028 | 2.87 | 0.31 | 0.005 | 0.0024 | 0.0018 | 1.19 | 0.00004 | - |
| 8 | 0.0035 | 2.82 | 0.29 | 0.007 | 0.0026 | 0.0021 | 1.16 | 0.00009 | 0.0001 |
| 9 | 0.0037 | 2.89 | 0.31 | 0.010 | 0.0026 | 0.0020 | 1.20 | 0.00008 | 0.0009 |
| 10 | 0.0014 | 2.83 | 0.31 | 0.006 | 0.0030 | 0.0017 | 1.23 | 0.00005 | 0.0018 |
| 11 | 0.0031 | 2.81 | 0.30 | 0.008 | 0.0025 | 0.0015 | 1.23 | 0.00009 | 0.0140 |
| 12 | 0.0038 | 2.84 | 0.30 | 0.007 | 0.0018 | 0.0028 | 1.19 | 0.00008 | 0.0434 |
| 13 | 0.0035 | 2.89 | 0.31 | 0.005 | 0.0027 | 0.0020 | 1.18 | 0.00035 | - |
| 14 | 0.0036 | 2.83 | 0.29 | 0.004 | 0.0021 | 0.0029 | 1.24 | 0.00032 | 0.0005 |
| 15 | 0.0027 | 2.89 | 0.30 | 0.005 | 0.0016 | 0.0019 | 1.22 | 0.00043 | 0.0009 |
| 16 | 0.0018 | 2.89 | 0.30 | 0.004 | 0.0027 | 0.0015 | 1.23 | 0.00016 | 0.0013 |
| 17 | 0.0022 | 2.84 | 0.30 | 0.010 | 0.0020 | 0.0015 | 1.23 | 0.00050 | 0.0196 |
| 18 | 0.0022 | 2.88 | 0.30 | 0.009 | 0.0017 | 0.0022 | 1.16 | 0.00020 | 0.0319 |
| 19 | 0.0035 | 2.90 | 0.30 | 0.007 | 0.0015 | 0.0015 | 1.19 | 0.00061 | - |
| 20 | 0.0033 | 2.82 | 0.32 | 0.010 | 0.0028 | 0.0024 | 1.15 | 0.00077 | 0.0002 |
| 21 | 0.0031 | 2.81 | 0.31 | 0.007 | 0.0028 | 0.0020 | 1.24 | 0.00072 | 0.0009 |
| 22 | 0.0024 | 2.84 | 0.30 | 0.007 | 0.0025 | 0.0026 | 1.21 | 0.00067 | 0.0012 |
| 23 | 0.0020 | 2.90 | 0.29 | 0.008 | 0.0023 | 0.0017 | 1.18 | 0.00070 | 0.0117 |
| 24 | 0.0028 | 2.86 | 0.29 | 0.005 | 0.0019 | 0.0016 | 1.25 | 0.00066 | 0.0468 |
| 25 | 0.0035 | 2.90 | 0.29 | 0.010 | 0.0030 | 0.0029 | 1.15 | 0.00173 | - |

**[Table 1-2]**

| mass% | | | | | | | | | | | | | | |
|---|---|---|---|---|---|---|---|---|---|---|---|---|---|---|
| Condition No. | C | Si | Mn | P | S | N | Al | Pb | Ca | Mo | Zn | Ti | Sn | Sb |
| 26 | 0.0016 | 2.80 | 0.29 | 0.004 | 0.0027 | 0.0017 | 1.23 | 0.00153 | 0.0004 | - | - | - | - | - |
| 27 | 0.0014 | 2.82 | 0.31 | 0.007 | 0.0019 | 0.0030 | 1.17 | 0.00169 | 0.0006 | - | - | - | - | - |
| 28 | 0.0038 | 2.88 | 0.29 | 0.005 | 0.0026 | 0.0018 | 1.23 | 0.00147 | 0.0018 | - | - | - | - | - |
| 29 | 0.0019 | 2.88 | 0.31 | 0.009 | 0.0017 | 0.0020 | 1.18 | 0.00197 | 0.0122 | - | - | - | - | - |
| 30 | 0.0028 | 2.85 | 0.29 | 0.009 | 0.0015 | 0.0029 | 1.20 | 0.00188 | 0.0430 | - | - | - | - | - |
| 31 | 0.0020 | 2.81 | 0.31 | 0.006 | 0.0030 | 0.0030 | 1.20 | 0.00274 | - | - | - | - | - | - |
| 32 | 0.0016 | 2.83 | 0.31 | 0.005 | 0.0026 | 0.0030 | 1.19 | 0.00388 | 0.0002 | - | - | - | - | - |
| 33 | 0.0024 | 2.89 | 0.29 | 0.008 | 0.0028 | 0.0026 | 1.16 | 0.00431 | 0.0008 | - | - | - | - | - |
| 34 | 0.0031 | 2.80 | 0.30 | 0.010 | 0.0024 | 0.0029 | 1.19 | 0.00243 | 0.0015 | - | - | - | - | - |
| 35 | 0.0016 | 2.88 | 0.31 | 0.007 | 0.0017 | 0.0020 | 1.22 | 0.00418 | 0.0111 | - | - | - | - | - |
| 36 | 0.0016 | 2.81 | 0.29 | 0.008 | 0.0015 | 0.0016 | 1.20 | 0.00384 | 0.0467 | - | - | - | - | - |
| 37 | 0.0022 | 2.82 | 0.31 | 0.007 | 0.0017 | 0.0015 | 1.15 | 0.00015 | 0.0019 | - | - | - | 0.0008 | - |
| 38 | 0.0025 | 2.81 | 0.29 | 0.005 | 0.0015 | 0.0015 | 1.24 | 0.00025 | 0.0011 | - | - | - | 0.0015 | - |
| 39 | 0.0019 | 2.84 | 0.28 | 0.009 | 0.0030 | 0.0022 | 1.21 | 0.00022 | 0.0016 | - | - | - | - | 0.0007 |
| 40 | 0.0012 | 2.81 | 0.32 | 0.006 | 0.0016 | 0.0023 | 1.24 | 0.00035 | 0.0017 | - | - | - | - | 0.0018 |
| 41 | 0.0018 | 2.89 | 0.30 | 0.004 | 0.0049 | 0.0015 | 1.23 | 0.00016 | 0.0013 | - | - | - | - | - |
| 42 | 0.0032 | 2.81 | 0.30 | 0.006 | 0.0063 | 0.0028 | 1.17 | 0.00026 | 0.0012 | - | - | - | - | - |
| 43 | 0.0025 | 2.81 | 0.29 | 0.005 | 0.0015 | 0.0047 | 1.24 | 0.00025 | 0.0011 | - | - | - | - | - |
| 44 | 0.0016 | 2.83 | 0.29 | 0.009 | 0.0027 | 0.0072 | 1.24 | 0.00026 | 0.0016 | - | - | - | - | - |
| 45 | 0.0033 | 2.86 | 0.31 | 0.009 | 0.0030 | 0.0023 | 1.20 | 0.00011 | 0.0012 | 0.005 | - | - | - | - |
| 46 | 0.0033 | 2.86 | 0.30 | 0.005 | 0.0030 | 0.0022 | 1.17 | 0.00025 | 0.0012 | - | 0.006 | - | - | - |
| 47 | 0.0029 | 2.88 | 0.31 | 0.004 | 0.0030 | 0.0024 | 1.18 | 0.00021 | 0.0016 | - | - | 0.005 | - | - |
| 48 | 0.0032 | 2.86 | 0.31 | 0.008 | 0.0029 | 0.0023 | 1.19 | 0.00013 | 0.0016 | 0.062 | - | - | - | - |
| 49 | 0.0030 | 2.85 | 0.30 | 0.005 | 0.0030 | 0.0020 | 1.17 | 0.00021 | 0.0012 | - | 0.058 | - | - | - |
| 50 | 0.0029 | 2.88 | 0.29 | 0.004 | 0.0031 | 0.0024 | 1.18 | 0.00021 | 0.0016 | - | - | 0.061 | - | - |
| 51 | 0.0018 | 2.87 | 0.30 | 0.005 | 0.0030 | 0.0027 | 1.19 | 0.00027 | 0.0014 | - | - | - | 0.192 | - |
| 52 | 0.0015 | 2.84 | 0.31 | 0.006 | 0.0023 | 0.0028 | 1.20 | 0.00014 | 0.0016 | - | - | - | 0.212 | - |
| 53 | 0.0020 | 2.87 | 0.31 | 0.005 | 0.0030 | 0.0024 | 1.17 | 0.00027 | 0.0016 | - | - | - | - | 0.193 |
| 54 | 0.0034 | 2.83 | 0.31 | 0.009 | 0.0015 | 0.0018 | 1.25 | 0.00049 | 0.0010 | - | - | - | - | 0.204 |

**[Table 1-3]**

| mass% | | | | | | | | | |
|---|---|---|---|---|---|---|---|---|---|
| Condition No. | C | Si | Mn | P | S | N | Al | Pb | Ca |
| 55 | 0.0028 | 2.83 | 0.31 | 0.005 | 0.0030 | 0.0024 | 1.95 | 0.00023 | 0.0016 |
| 56 | 0.0030 | 2.86 | 0.30 | 0.006 | 0.0029 | 0.0028 | 2.09 | 0.00031 | 0.0020 |
| 57 | 0.0031 | 2.43 | 0.32 | 0.006 | 0.0023 | 0.0022 | 1.22 | 0.00037 | 0.0010 |
| 58 | 0.0013 | 2.55 | 0.29 | 0.006 | 0.0030 | 0.0021 | 1.25 | 0.00029 | 0.0020 |
| 59 | 0.0037 | 4.95 | 0.31 | 0.007 | 0.0027 | 0.0017 | 1.23 | 0.00043 | 0.0018 |
| 60 | 0.0021 | 5.04 | 0.30 | 0.004 | 0.0020 | 0.0023 | 1.19 | 0.00043 | 0.0020 |
| 61 | 0.0020 | 2.82 | 0.008 | 0.005 | 0.0029 | 0.0017 | 1.24 | 0.00037 | 0.0013 |
| 62 | 0.0025 | 2.85 | 0.014 | 0.006 | 0.0020 | 0.0019 | 1.20 | 0.00049 | 0.0014 |
| 63 | 0.0015 | 2.82 | 2.92 | 0.004 | 0.0015 | 0.0028 | 1.24 | 0.00021 | 0.0017 |
| 64 | 0.0030 | 2.82 | 3.08 | 0.009 | 0.0022 | 0.0028 | 1.21 | 0.00033 | 0.0011 |
| 65 | 0.0034 | 2.86 | 0.29 | 0.092 | 0.0016 | 0.0022 | 1.15 | 0.00020 | 0.0010 |
| 66 | 0.0023 | 2.88 | 0.30 | 0.108 | 0.0027 | 0.0021 | 1.22 | 0.00041 | 0.0019 |
| 67 | 0.0048 | 2.84 | 0.31 | 0.004 | 0.0030 | 0.0019 | 1.25 | 0.00014 | 0.0016 |
| 68 | 0.0055 | 2.81 | 0.29 | 0.010 | 0.0029 | 0.0021 | 1.21 | 0.00016 | 0.0011 |
| 69 | 0.0031 | 3.60 | 0.29 | 0.006 | 0.0021 | 0.0016 | 1.18 | - | - |
| 70 | 0.0014 | 3.76 | 0.31 | 0.008 | 0.0028 | 0.0016 | 1.15 | - | 0.0005 |
| 71 | 0.0034 | 3.72 | 0.30 | 0.007 | 0.0026 | 0.0029 | 1.15 | - | 0.0006 |
| 72 | 0.0013 | 3.80 | 0.29 | 0.008 | 0.0026 | 0.0020 | 1.16 | - | 0.0016 |
| 73 | 0.0017 | 3.63 | 0.31 | 0.010 | 0.0026 | 0.0026 | 1.22 | - | 0.0172 |
| 74 | 0.0032 | 3.77 | 0.31 | 0.004 | 0.0024 | 0.0024 | 1.19 | - | 0.0403 |
| 75 | 0.0012 | 3.66 | 0.30 | 0.004 | 0.0026 | 0.0017 | 1.15 | 0.00002 | - |
| 76 | 0.0021 | 3.72 | 0.31 | 0.010 | 0.0017 | 0.0025 | 1.20 | 0.00006 | 0.0005 |
| 77 | 0.0021 | 3.62 | 0.29 | 0.004 | 0.0030 | 0.0017 | 1.24 | 0.00002 | 0.0006 |
| 78 | 0.0031 | 3.61 | 0.32 | 0.005 | 0.0023 | 0.0020 | 1.23 | 0.00006 | 0.0014 |
| 79 | 0.0034 | 3.63 | 0.32 | 0.008 | 0.0026 | 0.0027 | 1.15 | 0.00008 | 0.0115 |
| 80 | 0.0024 | 3.60 | 0.31 | 0.010 | 0.0021 | 0.0018 | 1.23 | 0.00006 | 0.0408 |

**[Table 1-4]**

| mass% | | | | | | | | | |
|---|---|---|---|---|---|---|---|---|---|
| Condition No. | C | Si | Mn | P | S | N | Al | Pb | Ca |
| 81 | 0.0015 | 3.76 | 0.30 | 0.004 | 0.0029 | 0.0016 | 1.18 | 0.00050 | - |
| 82 | 0.0020 | 3.70 | 0.31 | 0.010 | 0.0030 | 0.0016 | 1.16 | 0.00018 | 0.0002 |
| 83 | 0.0031 | 3.66 | 0.30 | 0.004 | 0.0015 | 0.0017 | 1.23 | 0.00048 | 0.0006 |
| 84 | 0.0028 | 3.74 | 0.29 | 0.007 | 0.0016 | 0.0030 | 1.21 | 0.00034 | 0.0010 |
| 85 | 0.0036 | 3.79 | 0.31 | 0.004 | 0.0027 | 0.0029 | 1.23 | 0.00047 | 0.0174 |
| 86 | 0.0017 | 3.69 | 0.30 | 0.004 | 0.0020 | 0.0020 | 1.19 | 0.00016 | 0.0417 |
| 87 | 0.0025 | 3.72 | 0.29 | 0.004 | 0.0016 | 0.0017 | 1.24 | 0.00090 | - |
| 88 | 0.0021 | 3.77 | 0.29 | 0.004 | 0.0015 | 0.0019 | 1.18 | 0.00069 | 0.0002 |
| 89 | 0.0018 | 3.79 | 0.29 | 0.007 | 0.0016 | 0.0019 | 1.25 | 0.00080 | 0.0009 |
| 90 | 0.0020 | 3.78 | 0.31 | 0.010 | 0.0021 | 0.0015 | 1.19 | 0.00090 | 0.0019 |
| 91 | 0.0015 | 3.67 | 0.30 | 0.006 | 0.0015 | 0.0029 | 1.15 | 0.00076 | 0.0174 |
| 92 | 0.0037 | 3.72 | 0.31 | 0.008 | 0.0025 | 0.0030 | 1.24 | 0.00073 | 0.0361 |
| 93 | 0.0036 | 3.79 | 0.29 | 0.010 | 0.0017 | 0.0027 | 1.25 | 0.00163 | - |
| 94 | 0.0020 | 3.80 | 0.31 | 0.005 | 0.0026 | 0.0021 | 1.15 | 0.00135 | 0.0003 |
| 95 | 0.0022 | 3.76 | 0.29 | 0.005 | 0.0022 | 0.0030 | 1.25 | 0.00198 | 0.0007 |
| 96 | 0.0017 | 3.60 | 0.31 | 0.008 | 0.0026 | 0.0019 | 1.23 | 0.00126 | 0.0012 |
| 97 | 0.0020 | 3.74 | 0.31 | 0.005 | 0.0022 | 0.0026 | 1.22 | 0.00102 | 0.0169 |
| 98 | 0.0015 | 3.63 | 0.31 | 0.006 | 0.0023 | 0.0030 | 1.15 | 0.00140 | 0.0428 |
| 99 | 0.0024 | 3.75 | 0.30 | 0.008 | 0.0019 | 0.0028 | 1.22 | 0.00350 | - |
| 100 | 0.0038 | 3.77 | 0.30 | 0.010 | 0.0028 | 0.0016 | 1.21 | 0.00348 | 0.0004 |
| 101 | 0.0027 | 3.78 | 0.31 | 0.010 | 0.0017 | 0.0026 | 1.23 | 0.00336 | 0.0006 |
| 102 | 0.0024 | 3.71 | 0.31 | 0.010 | 0.0021 | 0.0029 | 1.20 | 0.00488 | 0.0019 |
| 103 | 0.0031 | 3.68 | 0.31 | 0.004 | 0.0021 | 0.0022 | 1.22 | 0.00398 | 0.0180 |
| 104 | 0.0037 | 3.62 | 0.29 | 0.008 | 0.0015 | 0.0017 | 1.25 | 0.00458 | 0.0333 |

**[Table 1-5]**

| mass% | | | | | | | | | | | | | | | | | | |
|---|---|---|---|---|---|---|---|---|---|---|---|---|---|---|---|---|---|---|
| Condition No. | C | Si | Mn | P | S | N | Al | Pb | Ca | As | Nb | W | V | Ta | Cu | Mo | Ti | Zn |
| 105 | 0.0028 | 2.85 | 0.31 | 0.004 | 0.0027 | 0.0019 | 1.25 | 0.00037 | 0.0134 | 0.005 | - | - | - | - | - | - | - | - |
| 106 | 0.0029 | 2.83 | 0.29 | 0.010 | 0.0026 | 0.0017 | 1.25 | 0.00013 | 0.0115 | - | 0.003 | - | - | - | - | - | - | - |
| 107 | 0.0035 | 2.85 | 0.30 | 0.008 | 0.0021 | 0.0022 | 1.18 | 0.00021 | 0.0175 | - | - | 0.020 | - | - | - | - | - | - |
| 108 | 0.0037 | 2.80 | 0.30 | 0.008 | 0.0017 | 0.0028 | 1.17 | 0.00030 | 0.0109 | - | - | - | 0.010 | - | - | - | - | - |
| 109 | 0.0024 | 2.88 | 0.30 | 0.006 | 0.0027 | 0.0017 | 1.16 | 0.00040 | 0.0195 | - | - | - | - | 0.0010 | - | - | - | - |
| 110 | 0.0038 | 2.86 | 0.30 | 0.009 | 0.0016 | 0.0023 | 1.24 | 0.00039 | 0.0125 | - | - | - | - | - | 0.01 | - | - | - |
| 111 | 0.0021 | 2.86 | 0.31 | 0.008 | 0.0030 | 0.0030 | 1.22 | 0.00018 | 0.0181 | - | - | - | - | - | 0.95 | - | - | - |
| 112 | 0.0027 | 2.55 | 0.30 | 0.004 | 0.0027 | 0.0016 | 1.18 | 0.00046 | 0.0122 | - | - | - | - | - | - | 0.005 | 0.003 | - |
| 113 | 0.0032 | 3.55 | 0.29 | 0.005 | 0.0029 | 0.0026 | 1.17 | 0.00022 | 0.0184 | - | - | - | - | - | - | 0.005 | - | 0.006 |
| 114 | 0.0038 | 4.55 | 0.31 | 0.008 | 0.0024 | 0.0021 | 1.18 | 0.00035 | 0.0131 | - | - | - | - | - | - | - | 0.007 | 0.006 |
| 115 | 0.0017 | 5.55 | 0.30 | 0.010 | 0.0026 | 0.0030 | 1.24 | 0.00023 | 0.0130 | - | - | - | - | - | - | 0.003 | 0.006 | 0.007 |
| 116 | 0.0026 | 6.55 | 0.29 | 0.007 | 0.0025 | 0.0025 | 1.22 | 0.00018 | 0.0188 | - | - | - | - | - | 0.03 | 0.005 | - | - |
| 117 | 0.0032 | 7.55 | 0.31 | 0.005 | 0.0016 | 0.0027 | 1.19 | 0.00020 | 0.0105 | - | - | - | - | - | 0.23 | - | 0.007 | - |
| 118 | 0.0037 | 8.55 | 0.29 | 0.004 | 0.0015 | 0.0028 | 1.24 | 0.00017 | 0.0189 | - | - | - | - | - | 0.04 | - | - | 0.004 |
| 119 | 0.0012 | 9.55 | 0.30 | 0.004 | 0.0021 | 0.0028 | 1.25 | 0.00025 | 0.0151 | - | - | - | - | - | 0.03 | 0.006 | 0.004 | - |
| 120 | 0.0019 | 10.55 | 0.30 | 0.004 | 0.0028 | 0.0025 | 1.16 | 0.00046 | 0.0140 | - | - | - | - | - | 0.02 | 0.004 | 0.007 | 0.006 |
| 121 | 0.0038 | 11.55 | 0.31 | 0.009 | 0.0026 | 0.0023 | 1.24 | 0.00044 | 0.0133 | 0.004 | - | - | - | - | - | 0.003 | - | - |
| 122 | 0.0035 | 12.55 | 0.30 | 0.009 | 0.0030 | 0.0029 | 1.24 | 0.00019 | 0.0119 | 0.006 | - | - | - | - | - | - | 0.002 | - |
| 123 | 0.0029 | 13.55 | 0.31 | 0.004 | 0.0030 | 0.0028 | 1.17 | 0.00025 | 0.0131 | 0.008 | - | - | - | - | - | 0.004 | 0.007 | - |
| 124 | 0.0030 | 14.55 | 0.29 | 0.007 | 0.0016 | 0.0025 | 1.20 | 0.00043 | 0.0119 | 0.003 | - | - | - | - | - | 0.004 | 0.005 | 0.002 |
| 125 | 0.0013 | 15.55 | 0.31 | 0.010 | 0.0026 | 0.0016 | 1.22 | 0.00031 | 0.0161 | - | 0.002 | - | - | - | - | 0.003 | - | - |
| 126 | 0.0030 | 16.55 | 0.29 | 0.010 | 0.0022 | 0.0021 | 1.21 | 0.00037 | 0.0111 | - | 0.005 | - | - | - | - | - | 0.004 | - |
| 127 | 0.0034 | 17.55 | 0.29 | 0.004 | 0.0024 | 0.0024 | 1.18 | 0.00043 | 0.0186 | - | 0.009 | - | - | - | - | 0.004 | 0.006 | - |
| 128 | 0.0018 | 18.55 | 0.30 | 0.005 | 0.0015 | 0.0017 | 1.18 | 0.00019 | 0.0162 | - | 0.003 | - | - | - | - | 0.005 | 0.002 | 0.006 |

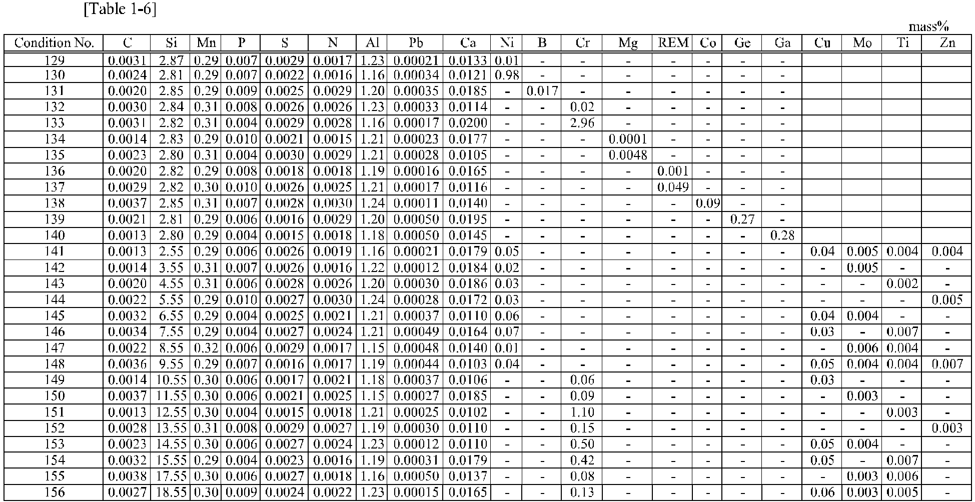

**[Table 2-1]**

| Condition No. | W_{10/400} (W/kg) | Burr height (µm) | Crystal grain size (µm) | Number density (particles/mm²) of Pb precipitates | Number density (particles/mm²) of Pb-Ca complex precipitates | Remarks |
|---|---|---|---|---|---|---|
| 1 | 13.95 | 55.5 | 102 | <0.01 | <0.01 | Comparative Example |
| 2 | 13.93 | 58.8 | 100 | <0.01 | <0.01 | Comparative Example |
| 3 | 13.95 | 61.0 | 112 | <0.01 | <0.01 | Comparative Example |
| 4 | 13.92 | 63.9 | 115 | <0.01 | <0.01 | Comparative Example |
| 5 | 13.92 | 62.1 | 101 | <0.01 | <0.01 | Comparative Example |
| 6 | 13.86 | 56.1 | 102 | <0.01 | <0.01 | Comparative Example |
| 7 | 13.99 | 46.4 | 83 | 7 | <0.01 | Comparative Example |
| 8 | 13.92 | 53.2 | 80 | 12 | <0.01 | Comparative Example |
| 9 | 13.98 | 47.0 | 70 | 18 | <0.01 | Comparative Example |
| 10 | 13.92 | 54.9 | 88 | 14 | <0.01 | Comparative Example |
| 11 | 13.96 | 46.8 | 83 | 18 | <0.01 | Comparative Example |
| 12 | 13.96 | 47.6 | 88 | 19 | <0.01 | Comparative Example |
| 13 | 16.21 | 25.7 | 42 | 140 | <0.01 | Comparative Example |
| 14 | 16.15 | 26.9 | 41 | 135 | 0.01 | Comparative Example |
| 15 | 16.15 | 22.1 | 49 | 136 | 0.09 | Comparative Example |
| 16 | 13.98 | 23.8 | 120 | 54 | 0.14 | Invention Example |
| 17 | 13.97 | 26.5 | 120 | 57 | 562 | Invention Example |
| 18 | 16.15 | 23.9 | 48 | 127 | 1054 | Comparative Example |
| 19 | 16.19 | 22.4 | 60 | 123 | <0.01 | Comparative Example |
| 20 | 16.18 | 23.7 | 49 | 133 | 0.04 | Comparative Example |
| 21 | 16.17 | 22.3 | 42 | 130 | 0.08 | Comparative Example |
| 22 | 13.96 | 25.8 | 112 | 28 | 0.18 | Invention Example |
| 23 | 13.91 | 22.5 | 116 | 28 | 501 | Invention Example |
| 24 | 16.21 | 24.8 | 42 | 133 | 1227 | Comparative Example |
| 25 | 16.17 | 25.3 | 59 | 122 | <0.01 | Comparative Example |

**[Table 2-2]**

| Condition No. | W_{10/400} (W/kg) | Burr height (µm) | Crystal grain size (µm) | Number density (particles/mm²) of Pb precipitates | Number density (particles/mm²) of Pb-Ca complex precipitates | Remarks |
|---|---|---|---|---|---|---|
| 26 | 16.19 | 26.1 | 44 | 130 | 0.03 | Comparative Example |
| 27 | 16.20 | 26.7 | 41 | 128 | 0.09 | Comparative Example |
| 28 | 13.90 | 26.5 | 113 | 28 | 0.20 | Invention Example |
| 29 | 13.94 | 22.4 | 112 | 34 | 669 | Invention Example |
| 30 | 16.19 | 22.0 | 55 | 122 | 1239 | Comparative Example |
| 31 | 16.27 | 25.0 | 48 | 125 | <0.01 | Comparative Example |
| 32 | 16.30 | 24.4 | 55 | 130 | 0.01 | Comparative Example |
| 33 | 16.27 | 22.8 | 41 | 140 | 0.06 | Comparative Example |
| 34 | 16.26 | 22.9 | 53 | 122 | 0.12 | Comparative Example |
| 35 | 16.25 | 24.2 | 46 | 128 | 634 | Comparative Example |
| 36 | 16.24 | 26.7 | 42 | 125 | 1030 | Comparative Example |
| 37 | 13.84 | 25.2 | 112 | 22 | 0.19 | Invention Example |
| 38 | 13.83 | 26.3 | 109 | 24 | 0.21 | Invention Example |
| 39 | 13.89 | 26.2 | 113 | 22 | 0.22 | Invention Example |
| 40 | 13.90 | 25.7 | 119 | 24 | 0.16 | Invention Example |
| 41 | 13.98 | 28.2 | 112 | 28 | 0.18 | Invention Example |
| 42 | 16.25 | 22.0 | 32 | 35 | 0.18 | Comparative Example |
| 43 | 13.90 | 28.6 | 108 | 22 | 0.33 | Invention Example |
| 44 | 16.24 | 23.7 | 36 | 30 | 0.13 | Comparative Example |
| 45 | 13.95 | 26.0 | 114 | 25 | 0.13 | Invention Example |
| 46 | 13.92 | 26.7 | 109 | 23 | 0.14 | Invention Example |
| 47 | 13.99 | 24.1 | 118 | 29 | 0.20 | Invention Example |
| 48 | 13.92 | 23.9 | 112 | 32 | 0.32 | Invention Example |
| 49 | 13.97 | 22.4 | 115 | 31 | 0.29 | Invention Example |
| 50 | 13.91 | 23.7 | 101 | 33 | 0.35 | Invention Example |
| 51 | 13.96 | 27.9 | 102 | 28 | 0.18 | Invention Example |
| 52 | 13.89 | 26.9 | 70 | 28 | 0.20 | Invention Example |
| 53 | 13.98 | 27.9 | 118 | 29 | 0.18 | Invention Example |
| 54 | 13.82 | 25.7 | 68 | 26 | 0.11 | Invention Example |

**[Table 2-3]**

| Condition No. | W_{10/400} (W/kg) | Burr height (µm) | Crystal grain size (µm) | Number density (particles/mm²) of Pb precipitates | Number density (particles/mm²) of Pb-Ca complex precipitates | Remarks |
|---|---|---|---|---|---|---|
| 55 | 13.81 | 29.5 | 98 | 25 | 0.31 | Invention Example |
| 56 | 13.72 | 41.1 | 110 | 37 | 0.11 | Comparative Example |
| 57 | 14.02 | 23.1 | 97 | 29 | 0.21 | Comparative Example |
| 58 | 13.96 | 24.2 | 103 | 30 | 0.19 | Invention Example |
| 59 | 13.67 | 29.3 | 99 | 28 | 0.22 | Invention Example |
| 60 | 13.75 | 79.0 | 117 | 37 | 0.20 | Comparative Example |
| 61 | 14.03 | 23.1 | 98 | 29 | 0.23 | Comparative Example |
| 62 | 13.96 | 25.4 | 102 | 28 | 0.18 | Invention Example |
| 63 | 13.98 | 26.5 | 112 | 23 | 0.18 | Invention Example |
| 64 | 14.08 | 28.0 | 55 | 20 | 0.16 | Comparative Example |
| 65 | 13.97 | 25.1 | 112 | 22 | 0.18 | Invention Example |
| 66 | - | - | - | - | - | Comparative Example |
| 67 | 13.98 | 26.5 | 113 | 23 | 0.18 | Invention Example |
| 68 | 14.12 | 27.3 | 98 | 25 | 0.31 | Comparative Example |
| 69 | 13.88 | 63.5 | 113 | <0.01 | <0.01 | Comparative Example |
| 70 | 13.84 | 62.5 | 100 | <0.01 | <0.01 | Comparative Example |
| 71 | 13.89 | 65.7 | 115 | <0.01 | <0.01 | Comparative Example |
| 72 | 13.82 | 67.7 | 107 | <0.01 | <0.01 | Comparative Example |
| 73 | 13.82 | 68.9 | 102 | <0.01 | <0.01 | Comparative Example |
| 74 | 13.81 | 69.8 | 118 | <0.01 | <0.01 | Comparative Example |
| 75 | 13.91 | 54.5 | 80 | 6 | <0.01 | Comparative Example |
| 76 | 13.85 | 54.1 | 81 | 12 | 0.05 | Comparative Example |
| 77 | 13.94 | 56.7 | 84 | 19 | 0.06 | Comparative Example |
| 78 | 13.91 | 54.3 | 79 | <0.01 | <0.01 | Comparative Example |
| 79 | 13.91 | 58.6 | 72 | <0.01 | <0.01 | Comparative Example |
| 80 | 13.85 | 55.0 | 79 | 15 | 1084 | Comparative Example |

**[Table 2-4]**

| Condition No. | W_{10/400} (W/kg) | Burr height (µm) | Crystal grain size (µm) | Number density (particles/mm²) of Pb precipitates | Number density (particles/mm²) of Pb-Ca complex precipitates | Remarks |
|---|---|---|---|---|---|---|
| 81 | 16.12 | 26.5 | 45 | 123 | <0.01 | Comparative Example |
| 82 | 16.14 | 29.8 | 51 | 139 | 0.04 | Comparative Example |
| 83 | 16.17 | 25.5 | 52 | 140 | 0.06 | Comparative Example |
| 84 | 13.80 | 28.4 | 110 | 30 | 0.17 | Invention Example |
| 85 | 13.90 | 28.6 | 108 | 22 | 537 | Invention Example |
| 86 | 16.12 | 29.3 | 51 | 128 | 1006 | Comparative Example |
| 87 | 16.15 | 26.9 | 47 | 128 | <0.01 | Comparative Example |
| 88 | 16.17 | 29.0 | 44 | 124 | 0.03 | Comparative Example |
| 89 | 16.11 | 25.4 | 58 | 134 | 0.09 | Comparative Example |
| 90 | 13.80 | 28.0 | 106 | 32 | 0.12 | Invention Example |
| 91 | 13.85 | 27.0 | 118 | 31 | 749 | Invention Example |
| 92 | 16.15 | 26.9 | 43 | 140 | 1162 | Comparative Example |
| 93 | 16.12 | 25.8 | 43 | 130 | <0.01 | Comparative Example |
| 94 | 16.18 | 25.6 | 44 | 140 | 0.01 | Comparative Example |
| 95 | 16.14 | 28.2 | 54 | 120 | 0.07 | Comparative Example |
| 96 | 13.83 | 25.6 | 116 | 28 | 0.14 | Invention Example |
| 97 | 13.81 | 26.5 | 104 | 31 | 607 | Invention Example |
| 98 | 16.19 | 26.1 | 57 | 137 | 1186 | Comparative Example |
| 99 | 16.13 | 26.1 | 54 | 137 | <0.01 | Comparative Example |
| 100 | 16.12 | 25.7 | 42 | 122 | 0.02 | Comparative Example |
| 101 | 16.20 | 25.0 | 53 | 135 | 0.08 | Comparative Example |
| 102 | 16.14 | 29.7 | 46 | 140 | 0.19 | Comparative Example |
| 103 | 16.10 | 26.6 | 42 | 123 | 570 | Comparative Example |
| 104 | 16.20 | 25.3 | 58 | 134 | 1092 | Comparative Example |

**[Table 2-5]**

| Condition No. | W_{10/400} (W/kg) | Burr height (µm) | Crystal grain size (µm) | Number Density (particles/mm²) of Pb precipitates | Number Density (particles/mm²) of Pb-Ca complex precipitates | Remarks |
|---|---|---|---|---|---|---|
| 105 | 13.91 | 25.9 | 115 | 39 | 0.20 | Invention Example |
| 106 | 13.91 | 22.1 | 105 | 38 | 0.17 | Invention Example |
| 107 | 13.99 | 25.3 | 105 | 44 | 0.18 | Invention Example |
| 108 | 13.92 | 24.6 | 102 | 52 | 0.14 | Invention Example |
| 109 | 13.91 | 22.9 | 112 | 57 | 0.13 | Invention Example |
| 110 | 13.98 | 26.0 | 114 | 60 | 0.14 | Invention Example |
| 111 | 13.91 | 22.0 | 103 | 32 | 0.14 | Invention Example |
| 112 | 13.89 | 27.0 | 107 | 31 | 0.18 | Invention Example |
| 113 | 13.89 | 29.9 | 100 | 32 | 0.16 | Invention Example |
| 114 | 13.85 | 29.1 | 111 | 36 | 0.16 | Invention Example |
| 115 | 13.81 | 28.4 | 110 | 35 | 0.20 | Invention Example |
| 116 | 13.85 | 28.6 | 105 | 34 | 0.12 | Invention Example |
| 117 | 13.82 | 28.1 | 117 | 39 | 0.17 | Invention Example |
| 118 | 13.84 | 27.3 | 107 | 35 | 0.13 | Invention Example |
| 119 | 13.86 | 25.0 | 108 | 36 | 0.17 | Invention Example |
| 120 | 13.85 | 27.6 | 106 | 25 | 0.19 | Invention Example |
| 121 | 13.83 | 28.7 | 114 | 20 | 0.19 | Invention Example |
| 122 | 13.87 | 29.3 | 118 | 27 | 0.17 | Invention Example |
| 123 | 13.86 | 29.2 | 117 | 32 | 0.15 | Invention Example |
| 124 | 13.88 | 28.4 | 101 | 31 | 0.15 | Invention Example |
| 125 | 13.82 | 27.2 | 107 | 26 | 0.12 | Invention Example |
| 126 | 13.83 | 26.9 | 101 | 30 | 0.18 | Invention Example |
| 127 | 13.88 | 25.1 | 105 | 23 | 0.11 | Invention Example |
| 128 | 13.82 | 27.7 | 117 | 40 | *0.15* | Invention Example |

**[Table 2-6]**

| **Condition** No. | W_{10/400} (W/kg) | Burr height (µm) | Crystal grain size (µm) | Number density (particles/mm²) of Pb precipitates | Number density (particles/mm²) of Pb-Ca complex precipitates | Remarks |
|---|---|---|---|---|---|---|
| 129 | 13.96 | 24.8 | 107 | 50 | 0.13 | Invention Example |
| 130 | 13.94 | 25.3 | 112 | 48 | 0.20 | Invention Example |
| 131 | 13.97 | 23.9 | 103 | 37 | 0.12 | Invention Example |
| 132 | 13.94 | 26.8 | 120 | 31 | 0.15 | Invention Example |
| 133 | 13.94 | 26.1 | 115 | 38 | 0.18 | Invention Example |
| 134 | 13.99 | 27.0 | 107 | 57 | 0.20 | Invention Example |
| 135 | 13.94 | 26.8 | 115 | 52 | 0.20 | Invention Example |
| 136 | 13.96 | 26.6 | 108 | 40 | 0.14 | Invention Example |
| 137 | 13.91 | 23.0 | 104 | 40 | 0.20 | Invention Example |
| 138 | 13.98 | 25.7 | 112 | 42 | *0.15* | Invention Example |
| 139 | 13.91 | 24.1 | 110 | 31 | 0.20 | Invention Example |
| 140 | 13.97 | 25.4 | 102 | 30 | 0.17 | Invention Example |
| 141 | 13.81 | 26.1 | 111 | 23 | 0.19 | Invention Example |
| 142 | 13.90 | 29.4 | 105 | 33 | 0.14 | Invention Example |
| 143 | 13.81 | 28.9 | 116 | 33 | 0.19 | Invention Example |
| 144 | 13.90 | 27.6 | 100 | 28 | 0.12 | Invention Example |
| 145 | 13.84 | 27.6 | 107 | 30 | 0.18 | Invention Example |
| 146 | 13.85 | 25.5 | 102 | 29 | 0.14 | Invention Example |
| 147 | 13.85 | 26.6 | 114 | 27 | 0.13 | Invention Example |
| 148 | 13.85 | 29.5 | 110 | 38 | 0.11 | Invention Example |
| 149 | 13.80 | 27.6 | 100 | 39 | 0.13 | Invention Example |
| 150 | 13.83 | 27.4 | 101 | 25 | 0.11 | Invention Example |
| 151 | 13.88 | 25.3 | 119 | 24 | 0.16 | Invention Example |
| 152 | 13.82 | 29.8 | 102 | 29 | 0.16 | Invention Example |
| 153 | 13.87 | 26.5 | 110 | 25 | 0.16 | Invention Example |
| 154 | 13.87 | 29.9 | 113 | 35 | 0.17 | Invention Example |
| 155 | 13.86 | 25.7 | 115 | 29 | 0.19 | Invention Example |
| 156 | 13.84 | 25.2 | 113 | 36 | 0.15 | Invention Example |

**[Table 3]**

| Condition No. | First slab reheating | | Second slab reheating | | First pass of hot rolling | | Hot-rolled sheet annealing |
|---|---|---|---|---|---|---|---|
| | Temperature (°C) | Time (min) | Temperature (°C) | Time (min) | Temperature (°C) | Rolling reduction | Temperature (°C) |
| 105 | 450 | 5 | 1100 | 20 | 1050 | 40 | 980 |
| 106 | 460 | 5 | 1100 | 20 | 1050 | 40 | 980 |
| 107 | 540 | 5 | 1100 | 20 | 1050 | 40 | 980 |
| 108 | 550 | 5 | 1100 | 20 | 1050 | 40 | 980 |
| 109 | 500 | 8 | 1100 | 20 | 1050 | 40 | 980 |
| 110 | 500 | 4 | 1100 | 20 | 1050 | 40 | 980 |
| 111 | 500 | 5 | 1050 | 20 | 950 | 40 | 980 |
| 112 | 500 | 5 | 1060 | 20 | 950 | 40 | 980 |
| 113 | 500 | 5 | 1140 | 20 | 1080 | 40 | 980 |
| 114 | 500 | 5 | 1150 | 20 | 1090 | 40 | 980 |
| 115 | 500 | 5 | 1100 | 30 | 1050 | 40 | 980 |
| 116 | 500 | 5 | 1100 | 15 | 1050 | 40 | 980 |
| 117 | 500 | 5 | 1070 | 20 | 930 | 40 | 980 |
| 118 | 500 | 5 | 1070 | 20 | 950 | 40 | 980 |
| 119 | 500 | 5 | 1140 | 20 | 1090 | 40 | 980 |
| 120 | 500 | 5 | 1140 | 20 | 1110 | 40 | 980 |
| 121 | 500 | 5 | 1100 | 20 | 1050 | 40 | 980 |
| 122 | 500 | 5 | 1100 | 20 | 1050 | 50 | 980 |
| 123 | 500 | 5 | 1100 | 20 | 1050 | 30 | 980 |
| 124 | 500 | 5 | 1100 | 20 | 1050 | 40 | 890 |
| 125 | 500 | 5 | 1100 | 20 | 1050 | 40 | 910 |
| 126 | 500 | 5 | 1100 | 20 | 1050 | 40 | 1090 |
| 127 | 500 | 5 | 1100 | 20 | 1050 | 40 | 1110 |

**[Table 4]**

| Condition No. | W_{10/400} (W/kg) | Burr height (µm) | Crystal grain size (µm) | Number density (particles/mm²) of Pb precipitates | Number density (particles/mm²) of Pb-Ca complex precipitates | Remarks |
|---|---|---|---|---|---|---|
| 105 | 16.2 | 29.4 | 60 | 112 | 0.05 | Comparative Example |
| 106 | 13.92 | 29.6 | 103 | 25 | 0.14 | Invention Example |
| 107 | 13.90 | 28.8 | 104 | 27 | 0.11 | Invention Example |
| 108 | 15.83 | 26.5 | 52 | 126 | 0.01 | Comparative Example |
| 109 | 13.87 | 27.1 | 101 | 22 | 0.21 | Invention Example |
| 110 | 16.35 | 25.1 | 88 | 105 | 0.05 | Comparative Example |
| 111 | - | - | - | - | - | fractured |
| 112 | 13.94 | 27.1 | 103 | 26 | 0.15 | Invention Example |
| 113 | 15.99 | 28.9 | 103 | 27 | 0.16 | Invention Example |
| 114 | 16.15 | 29.3 | 48 | 150 | 0.19 | Comparative Example |
| 115 | 13.92 | 28.0 | 110 | 19 | 0.31 | Invention Example |
| 116 | 16.35 | 27.2 | 64 | 123 | 0.03 | Comparative Example |
| 117 | - | - | - | - | - | fractured |
| 118 | 13.84 | 29.1 | 116 | 40 | 0.15 | Invention Example |
| 119 | 13.81 | 25.1 | 120 | 23 | 0.20 | Invention Example |
| 120 | 15.97 | 28.5 | 54 | 24 | 0.15 | Comparative Example |
| 121 | 13.82 | 26.5 | 100 | 27 | 0.14 | Invention Example |
| 122 | 13.87 | 27.8 | 117 | 39 | 0.14 | Invention Example |
| 123 | 15.69 | 26.5 | 55 | 29 | 0.15 | Comparative Example |
| 124 | 16.01 | 25.3 | 45 | 30 | 0.13 | Comparative Example |
| 125 | 13.81 | 27.4 | 109 | 23 | 0.14 | Invention Example |
| 126 | 13.89 | 25.4 | 115 | 33 | 0.16 | Invention Example |
| 127 | 16.21 | 28.5 | 58 | 36 | 0.16 | Comparative Example |

## Claims

1. A non-oriented electrical steel sheet comprising a component composition including, in mass %:
C: 0.005% or less;
Si: 2.5% to 5.0%;
Mn: 0.1% to 3.0%;
P: 0.100% or less;
S: 0.005% or less;
Al: 2.0% or less;
N: 0.005% or less;
Pb: 0.00010% to 0.00200%; and
Ca: 0.0010% to 0.020%, and further optionally including at least one of Groups A to E of components below:
- Group A: one or more elements selected from the group consisting of Mo: 0.001 to 0.050%, Zn: 0.001 to 0.010%, Ti: 0.001 to 0.010%, Sn: 0.001 to 0.200%, and Sb: 0.001 to 0.200%;
- Group B: one or more elements selected from the group consisting of As: 0.020% or less, Nb: 0.005% or less, W: 0.050% or less, V: 0.050% or less, Ta: 0.0020% or less, and Cu: 0.01 to 1.0%;
- Group C: one or more elements selected from the group consisting of Ni: 0.01 to 1.0% and B: 0.0020% or less;
- Group D: one or more elements selected from the group consisting of Cr: 0.01 to 3.0%, Mg: 0.0001 to 0.005%, and REM: 0.001 to 0.05%; and
- Group E: one or more elements selected from the group consisting of Co: 0.10% or less, Ge: 0.030% or less, and Ga: 0.030% or less,
with a balance being Fe and unavoidable impurities,
**characterized in that**:
a number density of Pb precipitates with a particle size of 10 to 100 nm is 100 particles/mm² or less, and
a number density of Pb-Ca complex precipitates with a particle size of 0.5 to 5.0 µm is 0.1 particles/mm² to 1000 particles/mm².

2. A method for producing a non-oriented electrical steel sheet, comprising:
a hot-rolling step of heating a steel slab with a component composition including, in mass %:
C: 0.005% or less,
Si: 2.5% to 5.0%,
Mn: 0.1% to 3.0%,
P: 0.100% or less,
S: 0.005% or less,
Al: 2.0% or less,
N: 0.005% or less,
Pb: 0.00010% to 0.00200%, and
Ca: 0.0010% to 0.020%, and further optionally including at least one of Groups A to E of components below:
- Group A: one or more elements selected from the group consisting of Mo: 0.001 to 0.050%, Zn: 0.001 to 0.010%, Ti: 0.001 to 0.010%, Sn: 0.001 to 0.200%, and Sb: 0.001 to 0.200%,
- Group B: one or more elements selected from the group consisting of As: 0.020% or less, Nb: 0.005% or less, W: 0.050% or less, V: 0.050% or less, Ta: 0.0020% or less, and Cu: 0.01 to 1.0%,
- Group C: one or more elements selected from the group consisting of Ni: 0.01 to 1.0% and B: 0.0020% or less,
- Group D: one or more elements selected from the group consisting of Cr: 0.01 to 3.0%, Mg: 0.0001 to 0.005%, and REM: 0.001 to 0.05%, and
- Group E: one or more elements selected from the group consisting of Co: 0.10% or less, Ge: 0.030% or less, and Ga: 0.030% or less,
with a balance being Fe and unavoidable impurities, followed by hot-rolling the steel slab to form a hot-rolled steel sheet;
a hot-rolled sheet annealing step of annealing the hot-rolled steel sheet to form a hot-rolled annealed sheet;
a cold-rolling step of subjecting the hot-rolled annealed sheet to cold rolling once or cold rolling two or more times with intermediate annealing interposed between the respective cold-rolling steps to form a cold-rolled steel sheet; and
a finishing annealing step of subjecting the cold-rolled steel sheet to finishing annealing,
**characterized in that**:
in the hot-rolling step, the steel slab heating includes a two-stage heating process of a first heating at a temperature of 460°C to 540°C for 5 minutes or more and a second heating at a temperature of 1060°C to 1140°C for 20 minutes or more, and finish rolling is performed such that, in a first pass, an entry-side steel sheet temperature is between 940°C and 1100°C and a rolling reduction is 40% or greater, and
the hot-rolled sheet annealing step is performed at an annealing temperature of 900°C to 1100°C.

3. The method for producing a non-oriented electrical steel sheet according to claim 2, wherein
the steel slab is a thin slab formed by continuous casting to have a thickness of 70 mm to 200 mm.
